# EUROPÄISCHE PATENTSCHRIFT

(11) **EP 1 747 969 B1**
(45) Veröffentlichungstag und Bekanntmachung des Hinweises auf die Patenterteilung: **01.04.2009**
(21) Anmeldenummer: 06013795.7
(22) Anmeldetag: 04.07.2006
(51) Int. Cl.: B62D 5/04, B60K 7/00

(54) **Antriebseinheit**
Drive Unit
Roue motrice

(30) Priorität: 28.07.2005 DE 102005035292
(43) Veröffentlichungstag der Anmeldung: 31.01.2007
(73) Patentinhaber: ZF Friedrichshafen AG, 88038 Friedrichshafen (DE)
(72) Erfinder: Scharfenberg, Stephan, 99869 Tüttleben (DE); Streipardt, Peter, 99880 Waltershausen (DE)

(56) Entgegenhaltungen:
- DE-A1- 19 949 351
- GB-A- 2 260 108
- JP-A- 60 078 831
- US-A- 5 128 598

## Beschreibung

Die Erfindung bezieht sich auf eine Antriebseinheit nach der im Oberbegriff von Anspruch 1 näher definierten Art.

Gattungsgemäße Antriebseinheiten werden beispielsweise zum Antrieb eines Flurförderzeuges oder in der Lagertechnik verwendet, wobei ein Antriebsmotor ein Fahrzeugrad im Sinne eines Antriebs und ein Lenkmotor das Fahrzeugrad im Sinne einer Lenkbewegung antreiben.

Die DE 199 49 351 A1 offenbart eine Antriebseinheit mit einem Antriebsmotor und einem Lenkmotor, wobei ein Untersetzungsgetriebe zwischen dem Antriebsmotor und dem Lenkmotor angeordnet ist, und der Antriebsmotor über dieses Untersetzungsgetriebe und ein Kegelradgetriebe das Antriebsrad antreibt. Der Lenkmotor treibt über ein Lenkgetriebe das Fahrzeugrad im Sinne einer Lenkbewegung an. Der Antriebsmotor, der Lenkmotor sowie die beiden Untersetzungsgetriebe sind koaxial zueinander angeordnet.

Die DE 103 28 651 A1 offenbart eine Antriebseinheit mit einem Antriebsmotor, welcher direkt ein Stirnradgetriebe antreibt, welches ein Fahrzeugrad antreibt, und einen Lenkmotor, welcher über ein Lenkgetriebe das Fahrzeugrad im Sinne einer Lenk-/Drehbewegung antreibt, wobei der Lenkmotor und der Antriebsmotor koaxial und direkt benachbart angeordnet sind.

Der vorliegenden Erfindung liegt die Aufgabe zugrunde, eine Antriebseinheit mit einem koaxial angeordneten Fahr- und Lenkmotor zu schaffen, welche ein Fahrzeugrad im Sinne einer Antriebsbewegung und einer Lenkbewegung antreibt, welcher einfach und kostengünstig aufgebaut sein soll.

Die Aufgabe wird mit einer, auch die kennzeichnenden Merkmale des Hauptanspruchs aufweisenden, gattungsgemäßen Antriebseinheit gelöst.

Erfindungsgemäß weist die Antriebseinheit einen koaxial angeordneten Lenk- und Fahrmotor auf, wobei zwischen dem Lenk- und Fahrmotor ein Untersetzungsgetriebe angeordnet ist, und der Abtrieb dieses Untersetzungsgetriebes eine Antriebswelle antreibt, welche in einer hohlen Antriebswelle des Fahrmotors angeordnet ist. Dadurch ist es möglich, den Lenkmotor oberhalb des Fahrmotors anzuordnen, wodurch der Antrieb einfach und modular aufgebaut werden kann. Die Antriebswelle des Lenkmotors treibt den Eingang des Untersetzungsgetriebes an, welcher als mehrstufiger Planetentrieb ausgebildet sein kann, es besteht jedoch auch die Möglichkeit, das Untersetzungsgetriebe, welches dem Lenkmotor nachgeschaltet angeordnet ist, als Wolfrom-Getriebe. Cyclo-Getriebe oder Planetengetriebe auszuführen.

In einer weiteren Ausgestaltungsform ist zwischen diesem Untersetzungsgetriebe und dem Antriebsmotor eine Bremse angeordnet, welche die Antriebswelle des Antriebsmotors gegenüber dem Gehäuse bremst. Es besteht auch die Möglichkeit, die Bremse im Bereich des Antriebsmotors, entgegengesetzt dem Untersetzungsgetriebe zwischen dem Anriebsmotor und dem Lenkmotor, anzuordnen. Die Bremse ist dann im Bereich des Lagers, über welches sich das Fahrzeugrad zum Gehäuse der Motore verdrehen kann, angeordnet. Durch diesen Aufbau ist es möglich, den Fahrmotor, die Bremse, das Lenkgetriebe und den Lenkmotor koaxial anzuordnen, wodurch sich der radiale Bauraum verringert.

In einer weiteren Ausgestaltungsform ist das Lenkgetriebe mit einem Lebensdauer-Schmiermittel versehen, wodurch sich die Wartung des Antriebs erheblich reduziert. Durch die Verwendung von bürstenlosen Gleich- oder Wechselstrommotoren in Standard- oder Scheibenläufer-Ausführung läßt sich die Wartung des Antriebs weiter verringern.

In einer weiteren Ausgestaltungsform der Erfindung ist das Gehäuse, welches die Bremse beinhaltet, gleichzeitig als Lagerschild des Fahrmotors ausgebildet. Je nach Anordnung der Bremse ist es das Schild im Bereich des Lenkgetriebes oder im Bereich des Stirnradgetriebes. Die Bremse ist vorteilhaft als Negativ-Bremse ausgebildet, d. h., die Bremse wird mit Federkraft im Schließsinne und elektrisch oder hydraulisch im Öffnungssinne betätigt. Hierbei besteht die Möglichkeit, die Bremse als naß- oder trockenlaufende Bremse auszuführen.

Weitere Merkmale sind der Figuren-Beschreibung zu entnehmen.

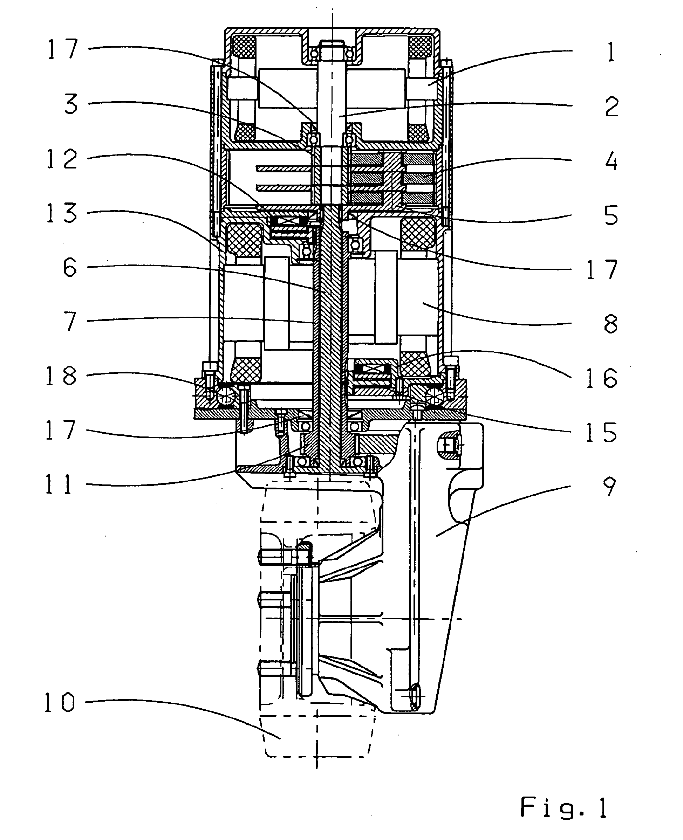

Die einzige Figur zeigt einen Antrieb mit einem Lenkmotor 1, welcher über eine Antriebswellle 2 ein inneres Zentralrad 3 eines mehrstufigen Planetengetriebes 4 antreibt. Der Planetenträger 5 der letzten Planetenstufe treibt eine Antriebswelle 6 an, welcher in einer hohlen Antriebswelle 7 des Fahrmotors 8 angeordnet ist. Die Antriebswelle 6 ist starr mit dem Fahrgetriebe 9 verbunden, um dieses und das Fahrzeugrad 10 im Sinne einer Lenkbewegung anzutreiben. Die Antriebswelle 7 des Fahrmotors 8 treibt über ein Stirnradgetriebe 1 und ein nicht gezeigtes Kegelradgetriebe das Fahrzeugrad 10 im Sinne einer Antriebsbewegung an. Das Stirnrad des Stirnradgetriebes 11 kann einstückig mit der Antriebswelle 7 ausgeführt sein, es besteht jedoch auch die Möglichkeit, das Stirnrad drehfest auf der Antriebswelle 7 zu befestigen. Auf der linken Seite des Fahrmotors 8 ist zwischen dem Fahrmotor 8 und dem Lenkgetriebe 4 eine Bremse 12 angeordnet, welche als Negativ-Bremse ausgeführt ist und die Antriebswelle 7 gegenüber dem Gehäuse 13 bremst. Die Bremse 12 wirkt mit einem Lagerschild 14 zusammen, welcher eine Lagerung für die Antriebswelle 7 beinhaltet. Das Gehäuse 13 kann mehrteilig ausgeführt sein, um für den Antriebsmotor, das Lenkgetriebe und den Lenkmotor jeweils ein eigenes Gehäusebauteil zu schaffen, es besteht jedoch auch die Möglichkeit, das Gehäuse 13 einstückig auszubilden. Auf der rechten Seite der Figur ist die Bremse 15 im Bereich des Stirnradgetriebes 11 angeordnet und wirkt mit dem weiteren Lagerschild 16 des Fahrmotors 8 zusammen. Die Getriebe sind jeweils über Dichtelemente 17 von den Motoren 1 und 8 flüssigkeitsdicht getrennt, es besteht jedoch auch die Möglichkeit, ein gemeinsames Kühl- und Schmiermittel zu verwenden. Über die Lagerung 18 kann das Fahrgetriebe 9 zum restlichen Antrieb mit den Motoren 1 und 8 verdreht werden.

### Bezugszeichen

- 1: Lenkmotor
- 2: Antriebswelle
- 3: inneres Zentralrad
- 4: mehrstufiges Planetengetriebe
- 5: Planetenträger
- 6: Antriebswelle
- 7: Antriebswelle
- 8: Fahrmotor
- 9: Fahrgetriebe
- 10: Fahrzeugrad
- 11: Stirnradgetriebe
- 12: Bremse
- 13: Gehäuse
- 14: Lagerschild
- 15: Bremse
- 16: Lagerschild
- 17: Dichtelement
- 18: Lagerung

## Patentansprüche

1. Antriebseinheit mit einem Lenkmotor (1) und einem Fahrmotor (8), welche koaxial zueinander angeordnet sind, wobei zwischen dem Lenkmotor (1) und dem Fahrmotor (8) ein Untersetzungsgetriebe (4) angeordnet ist, wobei der Antriebsmotor (8) ein Fahrzeugrad (10) antreibt und der Lenkmotor dieses Fahrzeugrad im Sinne einer Lenkbewegung um eine Drehachse antreibt, **dadurch gekennzeichnet, dass** der Fahrmotor eine hohle Antriebswelle (7) aufweist, durch welche eine mit dem Lenkmotor (1) in Verbindung stehende Antriebswelle (6) das Fahrzeugrad im Sinne der Lenkbewegung antreibt.

2. Antriebseinheit nach Anspruch 1, **dadurch gekennzeichnet, dass** das Untersetzungsgetriebe (4) zwischen dem Lenkmotor (1) und dem Fahrmotor (8) als ein mehrstufiges Planetengetriebe ausgebildet ist.

3. Antriebseinheit nach Anspruch 1, **dadurch gekennzeichnet, dass** die hohle Fahrmotorwelle (7) mit einem Stirnrad eines Stirnradgetriebes (11) drehfest verbunden ist.

4. Antriebseinheit nach Anspruch 1, **dadurch gekennzeichnet, dass** zwischen dem Untersetzungsgetriebe (4), welches zwischen dem Lenkmotor (1) und dem Fahrmotor (8) angeordnet ist, und dem Fahrmotor (8) eine Bremse (12) angeordnet ist.

5. Antriebseinheit nach Anspruch 1, **dadurch gekennzeichnet, dass** der Fahrmotor (8) benachbart zu einem Stirnradgetriebe (11) angeordnet ist.

6. Antriebseinheit nach Anspruch 1, **dadurch gekennzeichnet, dass** eine Bremse (15) zwischen dem Fahrmotor (8) und dem Stirnradgetriebe (11) angeordnet ist.

## Claims

1. Drive unit having a steering motor (1) and a traction motor (8) which are arranged coaxially with respect to one another, a step-down gear mechanism (4) being arranged between the steering motor (1) and the traction motor (8), the drive motor (8) driving a vehicle wheel (10) and the steering motor driving the said vehicle wheel in the sense of a steering movement about a rotational axis, **characterized in that** the traction motor has a hollow drive shaft (7), through which a drive shaft (6) which is connected to the steering motor (1) drives the vehicle wheel in the sense of the steering movement.

2. Drive unit according to Claim 1, **characterized in that** the step-down gear mechanism (4) between the steering motor (1) and the traction motor (8) is configured as a multiple-stage planetary gear mechanism.

3. Drive unit according to Claim 1, **characterized in that** the hollow traction-motor shaft (7) is connected in a rotationally fixed manner to a spur gear of a spur gear mechanism (11).

4. Drive unit according to Claim 1, **characterized in that** a brake (12) is arranged between the traction motor (8) and the step-down gear mechanism (4) which is arranged between the steering motor (1) and the traction motor (8).

5. Drive unit according to Claim 1, **characterized in that** the traction motor (8) is arranged adjacent to a spur gear mechanism (11).

6. Drive unit according to Claim 1, **characterized in that** a brake (15) is arranged between the traction motor (8) and the spur gear mechanism (11).

## Revendications

1. Unité d'entraînement comprenant un moteur de direction (1) et un moteur de propulsion (8), qui sont disposés coaxialement l'un à l'autre, un réducteur (4) étant disposé entre le moteur de direction (1) et le moteur de propulsion (8), le moteur d'entraînement (8) entraînant une roue du véhicule (10) et le moteur de direction entraînant cette roue de véhicule dans le sens d'un mouvement de direction autour d'un axe de rotation, **caractérisée en ce que** le moteur de propulsion présente un arbre d'entraînement creux (7) par le biais duquel un arbre d'entraînement (6) en liaison avec le moteur de direction (1) entraîne la roue du véhicule dans le sens du mouvement de direction.

2. Unité d'entraînement selon la revendication 1, **caractérisée en ce que** le réducteur (4) est réalisé entre le moteur de direction (1) et le moteur de propulsion (8) sous forme d'un engrenage planétaire à plusieurs étages.

3. Unité d'entraînement selon la revendication 1, **caractérisée en ce que** l'arbre creux du moteur de propulsion (7) est connecté de manière solidaire en rotation à un pignon droit d'un train de pignons droits (11).

4. Unité d'entraînement selon la revendication 1, **caractérisée en ce qu'**entre le réducteur (4) qui est disposé entre le moteur de direction (1) et le moteur de propulsion (8), et le moteur de propulsion (8), est disposé un frein (12).

5. Unité d'entraînement selon la revendication 1, **caractérisée en ce que** le moteur de propulsion (8) est disposé à côté d'un train de pignons droits (11).

6. Unité d'entraînement selon la revendication 1, **caractérisée en ce qu'**un frein (15) est disposé entre le moteur de propulsion (8) et le train de pignons droits (11).
